# EUROPEAN PATENT APPLICATION

(11) **EP 3 731 084 A1**
(43) Date of publication of application: **28.10.2020**
(21) Application number: 19171340.3
(22) Date of filing: 26.04.2019
(51) Int. Cl.: G06F 9/44, G05B 19/05, G05B 19/418

(54) **AUTOMATION SYSTEM AND METHOD FOR SEMANTICS-BASED INFORMATION DISCOVERY**

(71) Applicant: ABB Schweiz AG, 5400 Baden (CH)
(72) Inventor: Schulz, Dirk, 67149 Meckenheim (DE); Goldschmidt, Thomas, 76689 Karlsdorf-Neuthard (DE)

(57) **Abstract**

The present invention relates to an automation system (100) comprising a plurality of data sources (12); a controller (11); wherein the controller (11) and the plurality of data sources (12) are configured to identify a data source (121) of the plurality of data sources (12), which is capable of providing a required specific information by providing and analyzing a semantic description of the type of the specific required information.

## Description

### FIELD OF THE INVENTION

The present invention relates to an automation system, a method for identifying a data source in an automation system, a program element, a computer readable medium and the usage of the automation system.

### BACKGROUND

Today, communication, identification, and integration of data is often a manual and also project-specific task. State of the art description files describe the structure of device data and user interfaces for configuration, but they lack the semantics needed for machines to self-configure when being plugged into an automation system. For data analytics, the main effort still goes into the data preparation stage where, e.g., the structure and meaning of history data are analyzed and adapted before the actual (existing) analysis algorithm can be run.

For example, in conventional automation systems information about assets is discovered by defining namespaces. In each namespace a number of nodes exist, which are identified either by a node name or a node ID. The node name or the node ID together with the namespace allow a unique identification in the system which can be mapped to a physical address. The node is provided by a server, e.g., an Open Platform Communications Unified Architecture (OPC UA) server or an aggregated server, and can be accessed by a client. The names or IDs are known to an engineer, who can configure a client to access the data according to a desired view, e.g., to an application. A self-configuration, for example, if new devices or assets are introduced is not possible. Instead, e.g., the client has to be configured manually to access the node comprising the data of the introduced device.

Such manual approaches to establish communication, to identify automation components, and to integrate their data into various applications are costly, also with respect to calendar time, and error-prone. They do not yield themselves to self-configuration that is expected from Industrie 4.0 / Industrial loT systems of the future.

### SUMMARY

A mechanism is desired to mitigate a costly manual identification of components and configuration of the automation system.

The problem is solved by the subject-matter of the independent claims. Embodiments are provided by the dependent claims, the following description and the accompanying figures.

The described embodiments similarly pertain to the automation system, the method for identifying a data source in an automation system, and the usage of the automation system. Synergetic effects may arise from different combinations of the embodiments although they might not be described in detail.

Technical terms are used by their common sense. If a specific meaning is conveyed to certain terms, definitions of terms will be given in the following in the context of which the terms are used.

According to a first aspect, an automation system is provided, comprising a plurality of data sources and a controller, wherein the controller and the plurality of data sources are configured to identify a data source of the plurality of data sources, which is capable of providing a required specific information by providing and analyzing a semantic description of the type of the specific required information.

A main prerequisite for plug and produce (PnP) in automation systems is that the components which are supposed to interact, i.e., which are productive together, can communicate, find, identify, and understand each other automatically. In fact, the term plug and produce refers to a whole spectrum of self-x applications which benefit from a working PnP concept: ordering, configuration, testing, monitoring, optimization, prediction, replacement, etc.

Information consumers discover providers based on information content they require, not (transient) names, protocol or memory addresses. Semantics is made independent of protocols and technology-related properties such as addresses.

To achieve self-configuration, etc., in future automation systems, it must become possible to let machines or services find data sources by their semantics, not by names or addresses.

For this, machine-readable semantics within data models and discovery mechanisms in distributed, inter-networked automation systems are required. Regarding machine-readable semantics, it has to be considered that data points may have different meanings (multi-semantics) and that there is more than one way to express the same meaning (multi-language). Regarding networking aspects like broad- or multi-casting on network level have to be considered. Systems like OPC UA companion specifications lack of supporting multi-language and multi-semantics on existing data models. New meanings, i.e., semantics, or languages, i.e., standards, can be retrofit without changing the structure of the underlying (and possible standardized) data model.

Therefore, according to an embodiment, the information provided by the data source is multi-semantic; and, according to a further embodiment the information provided by the data source is multi-lingual.

According to an example, a method for identifying a node is provided, wherein the identification is performed by semantic tags.

In semantic tagging nodes are tagged with so-called semantic identifiers. Such an identifier is globally unique and refers to an existing specification. Examples of semantic tagging are given below. In the first three examples a node is semantically tagged, describing a measurement range in multiple "languages":
"urn:tag:eclass.org,2016:0173-1#02-BAB726#007"
"urn:tag:profibus.org,2016/names/PV SCALE.EU at 0%"
"urn:tag:profibus.org,2016/indices/11[0]"

The next three examples show multi-semantics of being a current, a measurement value and an energy consumption indicator:
"urn:tag:drivecom.org,2016/fault_measurements/2101"; current L1 on device input side.
"urn:tag:abb.com,2016/analysis/real measurement"; a measured value.
"urn:tag:abb.com,2016/dsm/power_consumption"; an energy- consumption.

The semantic identifiers are implemented, for example, using string arrays attached to nodes, where each string holds such a semantic identifier.

According to an embodiment, machine-readable semantics, e.g., using OPC UA, can be achieved by an agreement, by semantic references, or by semantic tagging.

Regarding OPC, machine-readable semantics using OPC UA can be achieved by agreement via traditional OPC UA companion specification. Such a specification defines one or more namespaces, wherein in each namespace a number of nodes (objects, variables, methods, etc.) with defined browse names or node IDs exist. This mostly relates to object types and a few singleton object instances (e.g., the DeviceSet in the OPC UA for Devices companion specification).

When semantic references are used for the semantics agreement, a reference type is introduced that signals semantic equality or similarity, i.e., generalization and specification. References to object types as used in OPC UA companion specifications might be considered as a special case of this generalized approach, but the main difference is that the OPC UA type system and semantics are fully decoupled. This approach introduces the concept of semantic address resolution, as explained below where references need to be followed until a semantically known node is found.

According to an aspect, a method for identifying a data source in an automation system is provided comprising the steps:
Requesting, by a controller, which in this case is an information consumer, specific information;
Providing, by the controller, a semantic description of the type of the specific required information;
Analyzing, by a data source, the semantic description of the type of the specific required information; and
Identifying, a data source under a plurality of data sources which is capable of providing the required specific information.

More specifically, the method further comprises:
Providing machine-readable semantics by the data source on its information model; Advertising, by the controller, the information required, e.g., by advertising which information it needs within the Industrie 4.0 domain they belong to;
Responding, by the data sources, or, e.g., a proxy, to this requirement, e.g., under consideration of security and performance policies;
Rating, by the controller, the responses, e.g., considering security, performance, and quality aspects;
Selecting, by the controller a source which is optimal for its needs; and
Exchanging, by the controller and the data source, the specific information using specific identifiers and protocol-specific addresses. in order to resolve the semantic address.

That is, in summary, technology-independent, machine-readable semantics is used during information discovery and is then resolved to technology-specific addressing, e.g., down to memory and hardware addresses, for efficient operational data exchange.

According to an aspect, a program element is provided, which when being executed by the controller, instructs the automation system to perform the steps described for the controller.

According to an aspect, a program element is provided, which when being executed by the data source, instructs the automation system to perform the steps described for the data source.

The program elements may be part of a computer program, but it can also be an entire program by itself. For example the computer program element may be used to update an already existing computer program to get to the present invention.

According to an aspect, a computer readable medium is provided on which a program element described above is stored. The computer readable medium may be seen as a storage medium, such as for example, a USB stick, a CD, a DVD, a data storage device, a hard disk, or any other medium on which a program element as described above can be stored.

According to aspects, an automation system as described above may be used for controlling a power plant, for controlling a factory, or for controlling actuators in a building such as, for example dimmers for light, devices for heating, entertainment, or may be used in further applications, for example, in the areas manufacturing including food and pharmaceutical, chemical and petroleum, pulp and paper, transportation including automotive, aerospace, and rail, utilities including water and wastewater, oil and gas, electric power, and telecommunications, facility operations including security, environmental control, energy management, safety, etc.

### SHORT DESCRIPTION OF THE FIGURES

Fig. 1 shows a block diagram of an automation system according to an embodiment.
Fig. 2 shows the process of realizing a specification or a standard.
Fig. 3 shows a hierarchy for semantic address resolution according to an embodiment.
Fig. 4 shows a method for identifying a data source in an automation system according to an embodiment.

### DETAILED DESCRIPTION OF EMBODIMENTS

The interoperability between network entities is based on a communication between these entities, wherein for communication unique addresses are necessary. The addresses may be physical addresses or virtual addresses that are converted finally to physical addresses. Virtual addresses may also be names instead of numbers, as, e.g., internet domain names, which are resolved by domain name server and related to e.g., dot-separated IP4-internet-addresses. For finding contents, either the address has to be known or to be found out somehow.

In automation systems, as, e.g., an OCP UA system, device information is stored in nodes. A node comprises an identifier, which may be a character string or a number. In automation systems, several different communication standards may present as, e.g. different bus types as, e.g., profibus of different standardized data models.

Under the term "node", a describing object of an asset as, for example, an electrical device as, e.g., a sensor, an actuator or a measurement device is understood. More specifically, a node is a node according to the OPC standard, that comprises, e.g., a measurement parameter, references to other nodes, and further information as e.g., device type, manufacturer, location, etc.

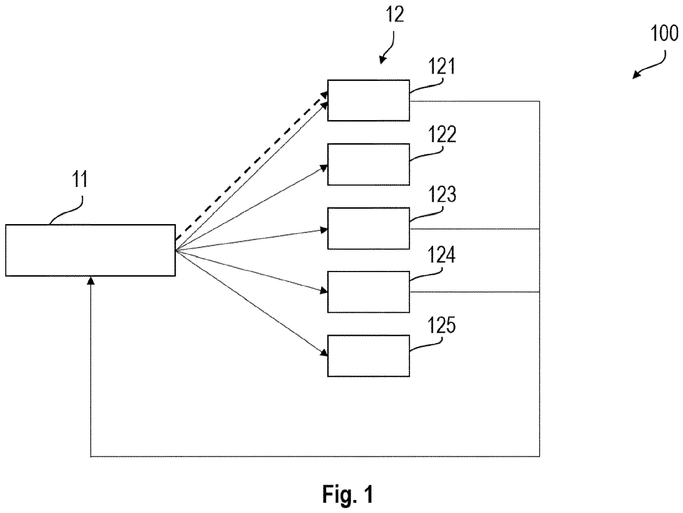

Fig. 1 shows a block diagram of an automation system 100 according to an embodiment. The automation system comprises a plurality of data sources 12 with data sources 121, 122, 123, 124, and 125, and a controller 11. The controller 11 sends a request for specific required data by advertising semantic description of the desired information to the plurality of data sources 12. The data sources 12 analyse the semantic description and in case of a match with their own data answer the request. In Fig. 1, this is the case for three data sources 121, 123, and 124, which send a reply with their semantic information and address information to the controller 11. The controller 11 chooses one or more of the replying data sources 121, 123, 124 according to its preferences or configuration, resolves the address down to the physical address and requests the required data from the selected data source 121 (dashed arrow in Fig. 1). The controller 11 may then, e.g., obtain the required data, or monitor the node data for a certain duration. The resolving of the physical address may also be performed - at least partly - by other instances in the network.

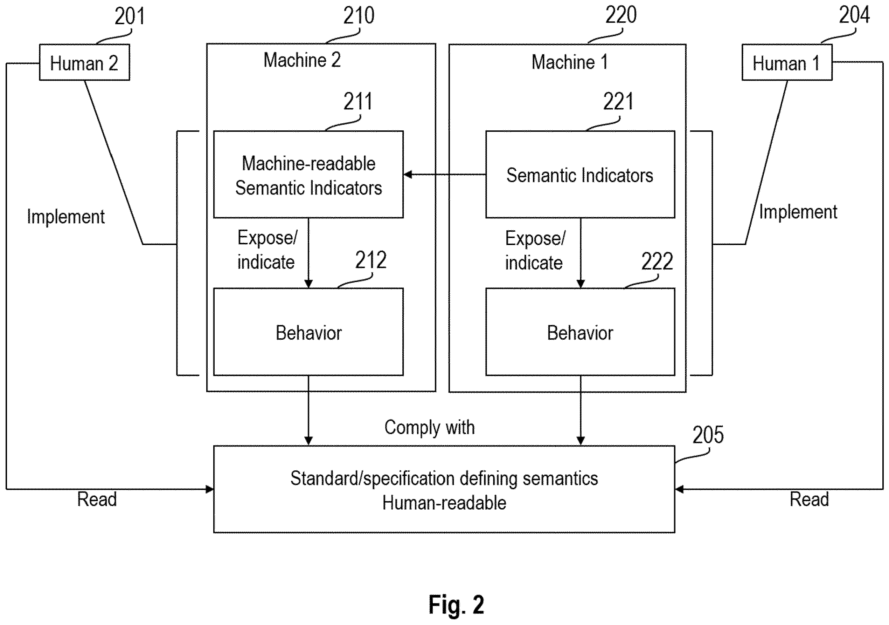

Fig. 2 illustrates the process of realizing a specification or a standard. Specifications themselves are not machine-readable. Humans 201, 204 read the document 205 defining the standard, and then build machines 202, 203 with a specific behavior212, 222 and an information model. The assumption in machine development is that, if two machines have the same semantic indicators 211, 221 in their models (e.g., tags), then the (hidden) implementation of their behavior also is the same, i.e., standard-compliant. It is therefore sufficient if machines check against these indicators.

With respect to the discovery, it is essential to distinguish between the host of information and the subject of information (the asset whose properties are described). E.g., a Field Device Integration (FDI) server contains properties (parameters, conditions) about potentially thousands of devices. The principal steps of discovery based on semantic indicators are:
Step 1: Discover information hosts (i.e. OPC UA servers)
Step 2: Query each information model for semantic indicators (what) and asset identifiers (who).
Step 3: On match, resolve indicators to protocol-specific addresses
Step 4: Execute data access using protocol-specific addressing

Implementation examples are described in the following.

In a distributed architecture, the controller 101, which is the information consumer in this case, discovers the data sources 12, which are the information hosts, and performs steps 2-3. Then, the controller 101 broadcasts information intent, and the data sources 12 perform on their part steps 2-3 and deliver the information to the controller 101. Step 1 is reduced because "any" source may be addressed with the broadcast.

In a floating architecture, the controller 11 broadcasts its needs, and a 3rd component may take over the steps 1-3 (not shown in Fig. 1).

In a centralized architecture, a dedicated repository is accessed to run steps 1-3.

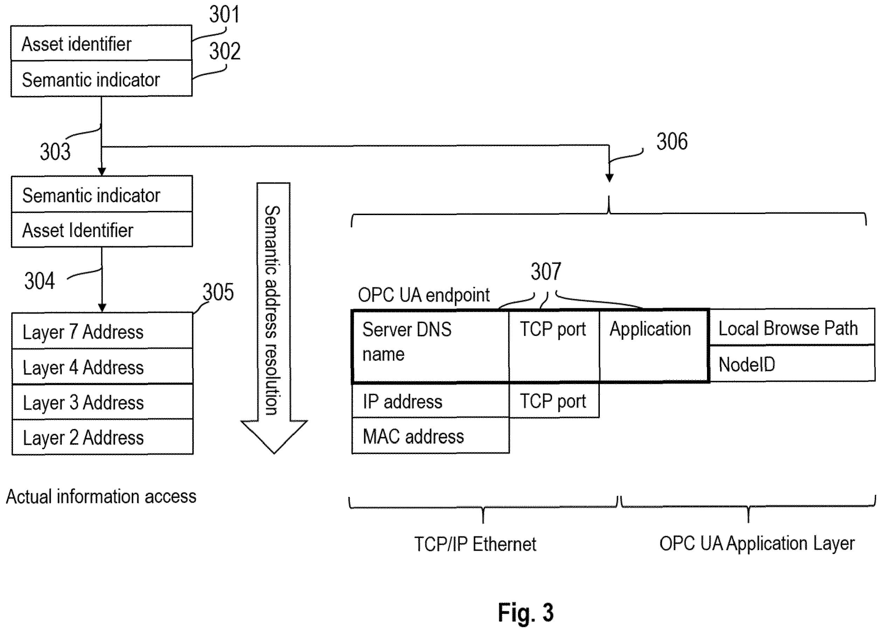

Step 3 typically also includes other and networking functions such as DNS name resolution, IP address resolution, etc. The entire resolution process including the structure of addressing information is illustrated in Fig. 3.

On the top, i.e., blocks 301 and 302, there is the input to the semantic discovery, which is an asset identifier 301 and a semantic indicator 302. The input can be described as: "what do we want to know about whom?". The resulting global identifiers in deployed information models 303 are either passed as global addresses 306 (which are the result of the semantic discovery) to an OPC UA endpoint, where the address may be further resolved according to the TCP/IP Ethernet model, where the address is resolved via server DNS name, IP address and finally MAC address, a TCP port, or an application. The global addresses 306, may also be passed to an OPC UA application layer via an application or Local Browse Path (including namespaces) and resolving the address as an OPC node ID (including namespaces). Or, the global identifiers in deployed information models 303 are passed as global address of information 304 to a general OSI layer model 305 following down the layers 7 to layer 2 for accessing the actual information.

Floating or centralized concepts always rely on a 3rd component, which should be integrated with an information control function.

In the following,
a) Engineering in Industrie 3.0 / Fieldbuses,
b) Engineering in Industrie 3.0 / Industrial Ethernet, and
c) Plug and Produce in Industrie 4.0 / Industrial loT
are compared to each other.

Regarding communication in a) Engineering of fieldbus and memory addresses, in b) Engineering of DHCP/DNS and configurations and memo addresses has to be done, whereas in c) addresses do not matter.

Regarding finding a node or an address, in a) Fieldbus Scan has to be performed, in b) the address has to be resolved by a DNS server or a DHCP server has to be polled, whereas in c) the address is auto-discovered.

Regarding the identity and assignment, an auto-identification by tag takes place in a), b), and c).

Regarding the understanding, in a) and b) human-readable standards and manuals are applied, whereas in c) machine-readable semantic information models are applied.

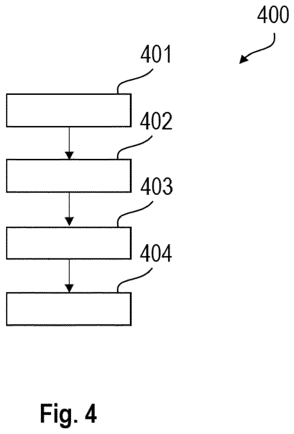

Fig. 4 shows a method 400 for identifying a data source in an automation system according to an embodiment, comprising the steps:
Requesting 401, by a controller, specific information;
Providing 402, by the controller, a semantic description of the type of the specific required information;
Analyzing 403, by a data source, the semantic description of the type of the specific required information; and
Identifying 404, a data source under a plurality of data sources which is capable of providing the required specific information.

Summarized, information is found by their meaning, not by network or memory addresses. This allows a whole new simplicity of plug and produce in automation systems, data integration and preparation in projects are achieved faster, also increasing flexibility and lowering the threshold when adding new data-driven applications (lower cost, shorter calendar time). More reliably (higher quality) with less (technology-specific) expertise for integration or debugging is obtained. Also, standardization of profiles becomes more agile because such activities can focus on defining data semantics in a technology-independent manner (agile standardization). Further, a transmission over new protocols is easier because model semantics is defined as payload within protocol application layers (technology independence). Lastly, standardization and system design both are rid of the side-effects of today's profile standards because even different standards for the same and for different semantics can perfectly co-exist on top of one and the same data model (superposition of semantics).

## Claims

1. Automation system (100), comprising
a plurality of data sources (12);
a controller (11);
wherein the controller (11) and the plurality of data sources (12) are configured to identify a data source (121) of the plurality of data sources (12), which is capable of providing a required specific information by providing and analyzing a semantic description of the type of the specific required information.

2. Automation system (100) according to claim 1,
wherein the automation system (100) is a distributed, inter-networked automation system; and the controller is further configured to advertise the required specific information by advertising the semantics of the required specific information.

3. Automation system (100) according to one of the preceding claims, wherein the information provided by the data source is multi-semantic.

4. Automation system (100) according to one of the preceding claims, wherein the information provided by the data source is multi-lingual.

5. Automation system (100) according to one of the preceding claims wherein the semantic description is based on semantic references and/or semantic tagging.

6. Use of an automation system (100) according to one of claims 1 to 5 for controlling a power plant.

7. Use of an automation system (100) according to one of claims 1 to 5 for controlling a factory.

8. Use of an automation system (100) according to one of claims 1 to 5 for controlling actuators in a building.

9. Method (400) for identifying a data source in an automation system (100) is provided comprising the steps:
requesting (401), by a controller (11), specific information;
providing (402), by the controller (11), a semantic description of the type of the specific required information;
analyzing (403), by a data source (121, 122, 123, 124, 125) the semantic description of the type of the specific required information; and
identifying (404), a data source (121) under a plurality of data sources (12) which is capable of providing the required specific information.

10. Program element, which when being executed by the controller (11), instructs the automation system (100) to perform the steps (401, 402) of claim 9.

11. Program element, which when being executed by the data source (121), instructs the automation system (100) to perform the steps (403, 404) of claim 9.

12. Computer readable medium on which a program element according to claim 10 and/or claim 11 is stored.
